# EUROPEAN PATENT SPECIFICATION

(11) **EP 3 181 321 B1**
(45) Date of publication and mention of the grant of the patent: **24.10.2018**
(21) Application number: 16204331.9
(22) Date of filing: 15.12.2016
(51) Int. Cl.: B29C 33/04, B29C 41/30, B29C 41/04

(54) **PROCESS FOR MANUFACTURING HOLLOW ELONGATED BODIES MADE OF COMPOSITE MATERIAL**
VERFAHREN ZUR HERSTELLUNG VON HOHLZYLINDRISCHEN KÖRPERN AUS EINEM SCHICHTVERBUNDMATERIAL
PROCEDE DE FABRICATION POUR LA FABRICATION D'OBJETS CYLINDRIQUES CREUX EN MATÉRIAU COMPOSITE

(30) Priority: 15.12.2015 IT UB20159457
(43) Date of publication of application: 21.06.2017
(73) Proprietor: Top Glass EU SA, 6348 Lugano (CH)
(72) Inventor: BRANCA, Alfonso, 20145 Milano (IT)
(74) Representative: Sutto, Luca

(56) References cited:
- EP-A1- 0 112 934
- WO-A1-02/068170
- FR-A1- 2 543 877

## Description

The present invention refers to an apparatus and process for manufacturing hollow elongated bodies made of composite material. For example, the apparatus and process find an application in the manufacturing of high strength poles, for example made of synthetic resin (in other words made of thermoplastic polymeric or thermosetting matrix), reinforced with synthetic fibres such as carbon fibres, glass fibres, aramid fibre, Kevlar, boron fibre or with natural fibres such as natural fibres of animal origin or natural fibres of vegetal origin.

Elongated hollow bodies made of composite material, such as for example poles, are actually formed in rotating moulds: in practice the rotating mould centrifugates at high speed the resin which in turn impregnates the fibre arranged inside the mould.

Particularly, the synthetic resin is introduced inside the mould by pouring the resin itself, at a liquid state, at the open ends of the mould: thanks to the motion given to the mould, the liquid resin is absorbed by the supporting layers made of reinforcing fibre.

However, such method does not enable to uniformly distribute the resin and, therefore, the poles manufactured in this way, exhibit uneven mechanical characteristics and geometrical inaccuracies.

Approaches have been made for solving this problem by providing the resin through a suitably shaped and positioned tube. Specifically, documents US4518342 and IT1160844 describe an apparatus for forming poles comprising inside the rotating mould one or more guiding elements for guiding a dispensing head supplied by a hose connected to a pressurized container of liquid resin. In operation, a layer of glass fibres is positioned on all the internal surface of the mould and then the mould is put in rotation. The resin dispensing head is moved towards the inside of the mould so that the resin can be distributed on the deposited layers of glass fibres.

After the pole has been formed by depositing the correct amount of resin and by means of suitably heating and centrifugating means, the guides and the dispensing head are removed and the pole is extracted from the mould.

Another known process is described in document US 4,515,547, wherein a resin injection nozzle is guided along the longitudinal direction of the mould and wherein a light source is arranged at the opposite end of the mould for lighting the inside of the mould itself, while a flange is fixed at the lower end of the mould. Due to the conical shape of the mould, during the rotation the resin tends to move away towards areas of greater diameter of the mould itself: the flange fixed at the end of the mould prevents the resin from undesiderably flowing outside.

While the above described solutions enable to manufacture poles of composite material of good quality, the actual manufacturing apparatuses and processes can be further improvable.

### SUMMARY OF THE INVENTION

In particular it is an object of the invention to provide an apparatus for the production of hollow bodies in which the mold forming of the hollow bodies is kept at uniform thermal conditions.
A further object of the invention is to ensure an adequate support and movement to the mold for forming the hollow bodies without compromising the simplicity of the apparatus.
An auxiliary object of the invention is to ensure the formation of bodies of a high quality and uniformity, without waste of synthetic resin.
These and further aims are substantially achieved by an apparatus and by a method according to one or more of the appended claims.
Further aspects of the invention are illustrated below.
A 1^{st} aspect concerns an apparatus for manufacturing hollow elongated bodies, optionally tapered poles, made of reinforced synthetic resin:
- an elongated mould having an internal surface configured for receiving reinforcing fibres and synthetic resin, said internal surface of the elongated mould having a tapered shape, optionally a frusto-conical one,
- at least one actuating device configured for putting in rotation the mould around a prevalent development longitudinal axis of the mould itself,
- at least one injection nozzle positioned and configured for introducing synthetic resin in said elongated mould, optionally wherein the injection nozzle is configured for operating at at least one longitudinal end of said mould,
- a resin supplying device connected to the injection nozzle and configured for supplying synthetic resin at a liquid state to the injection nozzle.

In a 2^{nd} aspect according to the 1^{st} aspect the injection nozzle is configured for operating at at least one longitudinal end of said mould.

In a 3^{rd} aspect according to any one of the preceding aspects, the apparatus includes:
- a temperature controlling group associated to the mould and in turn comprising:
   o a predetermined number of distributors of a thermoregulation fluid, positioned outside the mould and configured for directing the thermoregulation fluid at least towards predetermined portions of an external lateral surface of the mould itself,
   o a collecting unit positioned below the mould and configured for collecting the thermoregulation fluid,
   o a fluid circuit interposed between the collecting unit and the predetermined number of distributors, said fluid circuit being configured for conveying the thermoregulation fluid from the collecting unit towards the predetermined number of distributors.

In a 4^{th} aspect according to the preceding aspect the control group comprises at least one heat exchange unit, placed in the fluid circuit and destined to enable a thermal regulation of the thermoregulation fluid.

In a 5^{th} aspect according to any one of the preceding two aspects the control group comprises at least one pump placed in the fluid circuit, optionally placed between the collecting unit and the heat exchange unit.

In a 6^{th} aspect according to any one of the preceding two aspects the apparatus, or directly the control group, comprises a processing unit active on at least one of said pump and said heat exchange unit.

In a 7^{th} aspect according to the preceding aspect said processing unit is configured for regulating at least one of:
- a flow rate of said pump, and
- an operative parameter of said heat exchange unit for maintaining the thermoregulation fluid temperature inside a predetermined thermal range.

For example, the thermal range may be a temperature less than 100°C, preferably comprised between 80°C and 90°C.

In a 8^{th} aspect according to any one of the preceding aspects from the 3^{rd} to the 7^{th} the predetermined number of thermoregulation fluid distributors comprises a plurality of distinct distributors positioned outside the mould and configured for directing the thermoregulation fluid at least towards respective portions of an external lateral surface of the mould itself.

In a 9^{th} aspect according to any one of the preceding aspects from the 3^{rd} to the 8^{th} said distributors are radially arranged around the external lateral surface of the mould to define a plurality of ejecting points positioned according to circular crowns surrounding the mould and axially offset from each other.

In a 10^{th} aspect according to any one of the preceding aspects from the 3^{rd} to the 9^{th} the distributors are spaced along the longitudinal development of the mould, for example evenly spaced from each other.

In an 11^{th} aspect according to any one of the preceding aspects from the 3^{rd} to the 10^{th} each of said distributors comprises at least one regulation valve member and at least one pressure sensor connected to a processing unit (or to said processing unit), this latter being configured for receiving a pressure signal from each pressure sensor and for controlling each valve member in order to regulate a supply pressure and thus a flow rate of the thermoregulation fluid ejected from each distributor as a function of the detected pressure and a desired value of pressure (or flow rate).

In a 12^{th} aspect according to the preceding aspect the desired pressure value (or the flow rate value) is a set value for each distributor and varies as a function of the distributor position along the mould longitudinal axis.

In a 13^{th} aspect according to any one of the preceding two aspects the processing unit is configured for controlling the valve member of each distributor in order to supply the fluid at a supply pressure, the greater the diameter of the mould cross-section which the respective distributor faces the higher the supply pressure.

In a 14^{th} aspect according to any one of the preceding aspects from the 3^{rd} to the 13^{th} the apparatus comprises a supporting stationary structure destined to rotatively support said mould.

In a 15^{th} aspect according to the preceding aspect, the apparatus comprises a plurality of rolling element bearings positioned outside the mould, each of said bearings having a stationary part constrained to the supporting stationary structure, and a rotating part constrained to a respective cross-section of the external lateral surface of the mould, rolling elements being positioned between the stationary part and the rotating part of each bearing.

In a 16^{th} aspect according to the preceding aspect said stationary part and said rotating part of each bearing being positioned concentrically around a respective cross-section of the mould.

In a 17^{th} aspect according to any one of the preceding aspects from the 3^{rd} to the 16^{th} said fluid distributors are configured and oriented for directing a portion of the thermoregulation fluid towards said bearings.

In a 18^{th} aspect according to any one of the preceding aspects the actuating device comprises a driving member cinematically connected to the mould and configured for putting in rotation the mould around said prevalent development longitudinal axis of the mould itself.

In a 19^{th} aspect according to the preceding aspect said driving member commands a driving wheel coupled to the driving shaft and configured for moving at least one transmission member in turn configured for putting in rotation a driven crown coupled to an external surface of the lateral wall of the mould.

In a 20^{th} aspect according to the preceding aspect the elongated mould exhibits an external lateral surface and an internal frusto-conical shape surface, wherein said longitudinal axis is a symmetry central axis of the internal frusto-conical surface and wherein said driven crown is engaged to a terminal area of minimum diameter of the external lateral surface.

In a 21^{st} aspect according to any one of the preceding aspects the injection nozzle operates in a fixed position at a terminal area of the mould and exhibits a dispensing opening arranged inside the mould and at a predetermined distance - not greater than 1/10 of the mould axial extension - from the opening of minimum area of the mould itself.

In a 22^{nd} aspect according to any one of the preceding aspects the resin supplying device is configured for supplying at a pressure higher than the atmospheric pressure, synthetic resin at a liquid state to the injection nozzle.

In a 23^{rd} aspect according to any one of the preceding aspects the apparatus comprises a covering structure placed at least above and laterally to the external lateral surface of the mould to define a housing receiving the mould and the fluid distributors.

In a 24^{th} aspect according to any one of the preceding aspects the resin supplying device is configured for supplying liquid synthetic resin comprising at least one active agent at a first concentration, the active agent being one of:
- a crosslinking catalyst,
- a crosslinking accelerator,
- a crosslinking agent,
- an agent including both a crosslinking catalyst and a crosslinking accelerator,
- an agent including both a crosslinking agent and an accelerator,
- an agent including a crosslinking agent and a catalyst,
- an agent including a crosslinking agent, an accelerator and a crosslinking catalyst.

In a 25^{th} aspect according to any one of the preceding aspects the dispensing device is configured - at each cycle of manufacturing a respective elongated body - for dispensing a mass of liquid synthetic resin greater than the liquid mass necessary for forming said elongated body.

In a 26^{th} aspect according to the preceding aspect a processing unit (or said processing unit) is configured for controlling the dispensing device and commanding - during each cycle of manufacturing a respective elongated body - to dispense the liquid synthetic resin mass in an amount greater than the mass amount necessary for forming said elongated body in order to generate a surplus mass destined to exit from the mould.

In a 27^{th} aspect according to any one of the preceding aspects the apparatus comprises a main flange fixed at the longitudinal end of said mould having the greatest internal cross-section, said main flange projecting radially towards the inside of the mould and exhibiting an internal diameter substantially corresponding to the internal diameter of the longest base of said forming elongated body.

In a 28^{th} aspect according to the preceding aspect the apparatus comprises an ancillary flange fixed at the longitudinal end of said mould having the smallest inside cross-section, said ancillary flange projecting radially towards the inside of the mould and exhibiting an internal diameter substantially corresponding to the internal diameter of the shortest base of said forming elongated body.

In a 29^{th} aspect according to any one of the preceding two aspects said main flange and/or ancillary flange exhibit a circular crown shape and are concentrically and coaxially arranged with respect to the frusto-conical internal surface of said mould.

In a 30^{th} aspect according to any one of the preceding five aspects the apparatus comprises a collector placed at at least one of the longitudinal ends of the mould and configured for collecting a surplus mass of the liquid synthetic resin exiting the mould.

In a 31^{st} aspect according to any one of the preceding six aspects the apparatus comprises a collector placed at at least one of the longitudinal ends of the mould and configured for collecting a surplus mass of the liquid synthetic resin flowing over said main flange.

In a 32^{nd} aspect according to any one of the preceding two aspects
said collector exhibits a discharge opening, optionally a valved one, configured for discharging said surplus synthetic resin towards a collecting body.

In a 33^{rd} aspect according to any one of the preceding aspects the apparatus comprises an illuminator, preferably and UV illuminator, positioned relative to the mould such as to light an inner cavity of the mould and promote crosslinking of said synthetic resin.

In a 34^{th} aspect according to any one of the preceding aspects the apparatus comprises a winder, for example a tubular one, configured for receiving at least partially overlapped wound layers of a reinforcing fibrous material, optionally made of synthetic reinforcing fibres such as carbon fibres, glass fibres, aramid fibre, Kevlar, boron fibre or natural fibres such as natural fibres of animal origin or natural fibres of vegetal origin.

In a 35^{th} aspect according to the preceding aspect said elongated mould is open on at least one longitudinal end for enabling to respectively introduce and extracting from said mould the winder.

In a 36^{th} aspect according to any one of the preceding two aspects a movement for inserting and extracting the winder, is performed by at least one respective actuating group controlled by a processing unit (or said processing unit).

A 37^{th} aspect concerns a process of manufacturing hollow elongated bodies, optionally tapered poles, made of reinforced synthetic resin, comprising - for each hollow body manufacturing cycle - the following steps:
- arranging, inside an elongated mould, reinforcing fibres in order to substantially cover a predominant portion of the internal surface of the mould, said internal surface of the elongated mould having a tapered shape, optionally a frusto-conical one,
- introducing into said mould an amount of liquid synthetic resin comprising at least one active agent at a first concentration, the active agent being selected among:
   o a crosslinking catalyst,
   o a crosslinking accelerator,
   o a crosslinking agent,
   o an agent including both a crosslinking catalyst and a crosslinking accelerator,
   o an agent including both a crosslinking agent and an accelerator,
   o an agent including a crosslinking agent and a catalyst,
   o an agent including a crosslinking agent, an accelerator and a crosslinking catalyst,
- putting in rotation the mould around a prevalent development longitudinal axis of the mould itself in order to impregnate said reinforcing fibres with said liquid synthetic resin,
- solidifying said liquid synthetic resin for forming an elongated hollow body,
- extracting said elongated hollow body at the solid state from the mould.

In a 38^{th} aspect according to the preceding aspect said solidification comprises a crosslinking and said synthetic resin comprises polymer or polymerizable material.

In a 39^{th} aspect according to any one of the preceding two aspects the process provides that:
- the liquid synthetic resin introduced in said mould, during each cycle of manufacturing a respective elongated body, exhibits a mass greater than the liquid mass necessary for forming said elongated body for therefore defining a surplus mass of liquid resin,
- the surplus mass is collected outside said mould, and
- to the surplus mass collected outside the mould it is added a new liquid resin mass in which said active agent is present at a second concentration smaller than the one of said first concentration for forming a mixture of liquid resin.

In a 40^{th} aspect according to the preceding aspect the second mass concentration of the active agent is zero or less than 0.01%.

In a 41^{st} aspect according to any one of the preceding two aspects the surplus mass is collected in a collector placed in at least one of the longitudinal ends of the mould and is transferred to a container wherein said liquid resin mixture is formed.

In a 42^{nd} aspect according to any one of the preceding three aspects the new liquid resin mass added to the surplus mass collected outside the mould for forming the liquid resin mixture in said container, is at least equal to the surplus mass, so that the concentration of said active agent in the liquid mixture in said container is 50% or less than the first concentration.

In a 43^{rd} aspect according to any one of the preceding four aspects the new liquid resin mass added to the surplus mass collected outside the mould for forming the liquid resin mixture in said container, is more than the surplus mass, so that the concentration of said active agent in the liquid mixture in said container is less than the first concentration.

In a 44^{th} aspect according to any one of the preceding five aspects the new liquid resin mass added to the surplus mass collected outside the mould for forming the liquid resin mixture in said container, is at least twice to the surplus mass.

In a 45^{th} aspect according to any one of the preceding six aspects
- once completed the cycle of manufacturing at least one elongated hollow body - to said resin mixture it is added a composition comprising said active agent at a third concentration for forming a liquid synthetic resin with the active agent at least at said first concentration which - in a following hollow body manufacturing cycle - is supplied inside said mould.

In a 46^{th} aspect according to any one of aspects from the 37^{th} to the 45^{th}, the process uses and apparatus according to any one of aspects from the 1^{st} to the 36^{th}.

In a 47^{th} aspect according to any one of aspects from the 37^{th} to the 46^{th} - during said step of introducing the synthetic resin in the mould - this latter is put in rotation around a prevalent development longitudinal axis of the mould itself, particularly at a predetermined angular speed.

In a 48^{th} aspect according to any one of aspects from the 37^{th} to the 47^{th}, the liquid state synthetic resin is supplied to the injection nozzle at a pressure greater than the atmospheric pressure.

In a 49^{th} aspect according to any one of aspects from the 37^{th} to the 48^{th}, the process has the steps of controlling the temperature of the mould by directing a thermoregulation fluid at least towards predetermined portions of an external lateral surface of the mould itself, collecting the thermoregulation fluid falling from the mould, conveying the collected thermoregulation fluid again towards said portions of the external lateral surface of the mould.

In a 50^{th} aspect according to the preceding aspect the collected thermoregulation fluid is initially supplied to a heat exchange unit in order to enable to thermally regulate the thermoregulation fluid and therefore again towards said portions of the external lateral surface of the mould.

In a 51^{st} aspect according to any one of the preceding two aspects the thermoregulation fluid supplied to the mould is maintained at a temperature inside a predetermined thermal range, for example at a temperature smaller than 100°C, preferably comprised between 80°C and 90°C.

In a 52^{nd} aspect according to any one of the preceding three aspects the thermoregulation fluid is directed at least towards a plurality of portions of an external lateral surface of the mould itself.

In a 53^{rd} aspect according to any one of the preceding four aspects a portion of the thermoregulation fluid is directed towards the rotating supporting bearings of the mould.

In a 54^{th} aspect according to any one of the preceding aspects from the 37^{th} to the 53^{rd} said synthetic resin is of a light-crosslinkable type, and wherein it is provided to light an internal cavity of the mould itself for promoting or aiding said solidification by crosslinking said liquid synthetic resin.

In a 55^{th} aspect according to any one of the preceding aspects from the 37^{th} to the 54^{th} it is provided a step of preparing reinforcing fibres to be arranged inside the mould, said preparing step comprising:
- arranging in a plane a plurality of layers of said reinforcing fibers, optionally wherein each of said layers exhibits a respective width and a respective length different from the ones of the other layers,
- at least partially overlapping on each other said layers,
- winding said layers on a winder, optionally on a tubular winder.

In a 56^{th} aspect according to the preceding aspect the step of arranging the reinforcing fibres inside said elongated mould comprises:
- introducing in said mould, the winder having said layers wound on the winder itself said introduction being performed through at least one end opening of the mould,
- drawing away the winder from the fibrous material (F) and extracting such winder from the mould,
- putting in rotation the mould in order to enable to unwind the reinforcing fibres layers and progressively depositing the same at said internal surface of the mould.

In a 57^{rd} aspect according to any one of the preceding aspects from the 37^{th} to the 56^{th} the step of inserting the liquid resin in the mould is performed by maintaining the injection nozzle in a fixed position at a terminal area of the mould, the dispensing opening being arranged inside the mould and at a predetermined distance - not greater than 1/3 of the mould axial extension - from a minimum area opening of the mould itself.

In a 58^{rd} aspect according to any one of the preceding aspects from the 37^{th} to the 57th the thermoregulation fluid comprises water or, preferably, oil, particularly diathermic oil.

In a 59^{th} aspect according to any one of the preceding aspects from the 37^{th} to the 58^{th} the reinforcing material comprises synthetic reinforcing fibers, such as carbon fibers, glass fibers, aramid fibre, Kevlar, boron fibre or natural reinforcing fibres such as natural fibres of animal origin or natural fibres of vegetal origin.

In a 60^{th} aspect said reticulating agent is a crosslinking catalyst or accelerator.

### DETAILED DESCRIPTION

Further characteristics and advantages will better appear from the detailed description of an exemplifying
- and therefore non-limiting - embodiment of an apparatus and process according to the invention. The detailed description will be given with reference to the accompanying drawings which are provided in an indicative and non limiting way, wherein:
- Figure 1 is a schematic view of an apparatus for manufacturing elongated hollow bodies, and particularly tapered tubular poles according to the aspects of the invention;

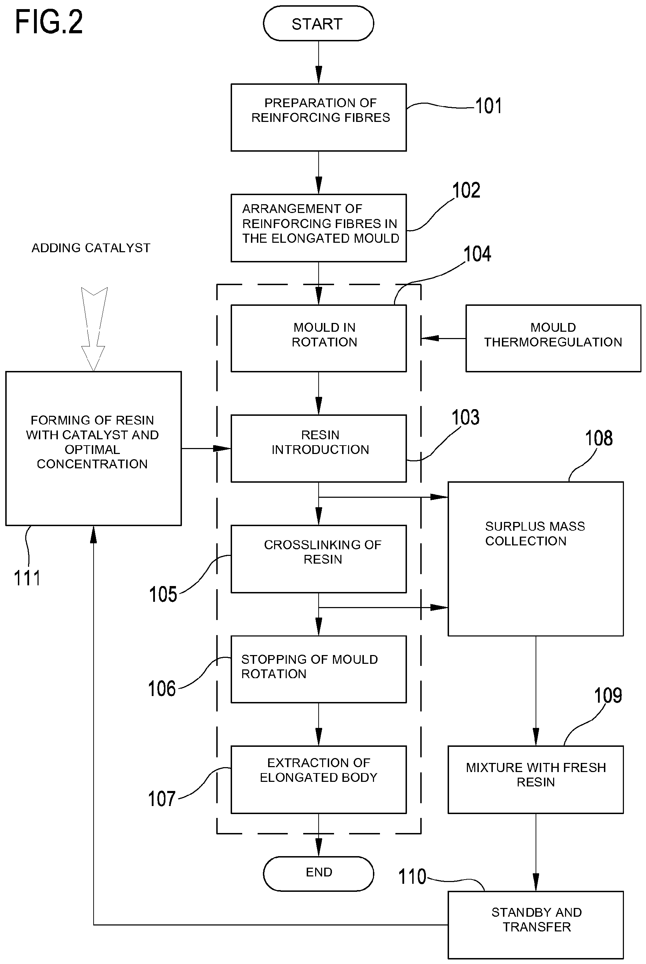

- Figure 2 is a flowchart showing the steps of a process, using for example the apparatus in Figure 1, for manufacturing elongated hollow bodies, and particularly tapered tubular poles according to the aspects of the invention.

With reference to the accompanying figures, 1 generally indicates an apparatus for manufacturing elongated hollow bodies, and particularly tubular poles made of reinforced synthetic resin.

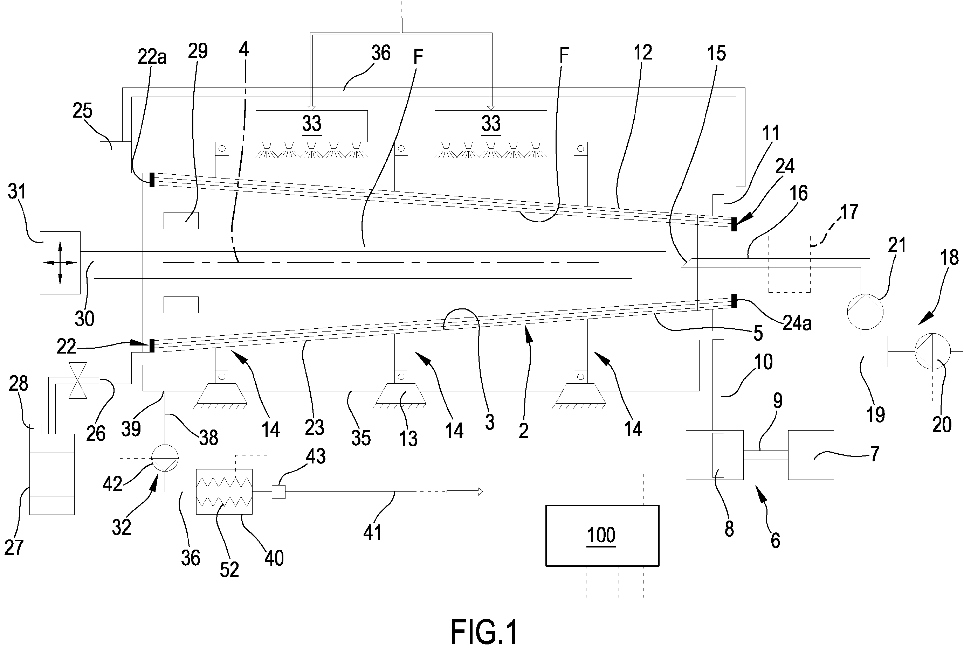

The apparatus 1 comprises a mould 2 having an elongated shape exhibiting an internal surface 3 configured for receiving reinforcing fibres F and synthetic resin. The internal surface 3 of the elongated mould 2 has a tapered shape; particularly, in the herein illustrated example, the mould 2 exhibits an axial symmetrical shape with reference to its prevalent development longitudinal axis 4 which is also a symmetry axis. Further, in the illustrated example, both the internal surface 3 and the external surface 5 of the mould 2 are frusto-conical and concentric so that, by putting in rotation the mould around said longitudinal axis, there will be no eccentric masses. Obviously, the apparatus can comprise a plurality of moulds 2 operating parallely to each other: for simplifying the description, the following will describe an example of an apparatus 1 with a single mould 2, however the characteristics described in the following can be applied to the case of a plurality of moulds operating in parallel. For putting the mould 2 in rotation around the prevalent development longitudinal axis 4 of the mould itself, the apparatus 1 comprises at least one actuating device 6 having a driving member 7 cinematically connected to the mould 2. In the illustrated example, the driving member 7 commands a driving wheel 8, for example formed by a driving pulley, coupled to the driving shaft 9, and configured for moving at least one transmission member 10, such as for example a transmission belt. The transmission member 10 in turn engages a driven wheel 11 connected to the mould. For example, the driven wheel 11 can be formed by a circular crown coupled to an external surface of the lateral wall of the mould 2 in order to receive the motion of the transmission member 10 and transfer it to the mould. Other cinematic elements for transmitting the motion can be provided besides what has been shown in Figure 1: for example, the driving shaft 9 can be connected to a toothed driving wheel capable of engaging - directly or by interposing further transmission members - a driven "wheel" comprising a gear rack supported outside the mould.

In any case, for limiting the radial size, the circular driven crown 11, implemented as a toothed crown, a gear rack or pulley, is preferably engaged to a terminal area 12 of minimum diameter of the external lateral surface of the mould.

In order to enable to rotate the mould around its longitudinal axis, the apparatus 1 comprises a stationary supporting structure 13 adapted to rotatively support the mould, as specifically described in the following. Particularly, the apparatus 1 comprises a plurality of bearings 14 having rolling elements, located externally to the mould itself; as a function of the axial size of the mould 2, two or more bearings 14 may be provided: for example, the apparatus 1 may comprise three, four or more bearings axially evenly spaced from each other along the longitudinal development of the mould. Each bearing 14 exhibits a stationary part constrained to the stationary supporting structure 13, and a rotating part constrained to a respective section of the external lateral surface of the mould; both the stationary part and the rotating part surround the mould lateral surface and are arranged coaxially to this latter: in other words, each bearing exhibits an internal diameter such to be engaged to the respective section of the mould 1; between the stationary part and the rotating part of each bearing there are rolling elements (rollers, balls or similar, for example) enabling to support and rotate under conditions of minimum friction of the mould. As shown in Figure 1, the bearings are engaged so that the symmetry longitudinal axis 4 of the mould is substantially horizontal.

In order to enable to supply the liquid resin inside the mould, the apparatus 1 then comprises at least one injection nozzle 15 configured for operating at at least one longitudinal end of said mould; the injection nozzle 15 may consist in a terminal part of a resin supplying tube 16 fixedly positioned or supported by a moveable head 17 which may be moved away from the mould 2 so that the injection nozzle exhibits the desired axial position with respect to the mould. More particularly, the injection nozzle is positioned and configured for ensuring the precise introduction of the synthetic resin, without wasting it, in said elongated mould 2: in practice, during the injection, the injection nozzle 15 operates in a stationary position at a terminal area of the mould (particularly at the minimum diameter terminal area 12 of the mould 2) and exhibits a dispensing opening arranged inside the mould. Still more particularly, according to an aspect of the invention, the dispensing opening of the injection nozzle 15 is placed, during the liquid synthetic resin supply, at a predetermined distance - not greater than 1/10 of the axial extension of the mould - from the minimum area opening of the mould itself. In the example of Figure 1, the nozzle injecting opening 15 is located, during the resin injection, at about 10-15 cm from the minimum area cross-section of the mould. Still referring to Figure 1, it is observed that the injection nozzle is positioned at an end of the supplying tube 16 having a further end connected to a resin supplying device 18 configured for supplying synthetic resin at a liquid state to the injection nozzle 15; it is noted that in case it is provided the movable head 17, the supplying tube 16 will comprise two portions: one extending between the head and nozzle 15 and one (capable of extending and retracting) extending between the head 17 and supplying device 18. For example, the supplying device 18 can comprise a pressurized supplying tank 19 and therefore capable of supplying liquid synthetic resin at a pressure greater than the atmospheric pressure: the tank pressurization may be ensured, for example, by an air-powered pump 20 active on the reservoir 19. Alternatively, the supplying device 18 may comprise a supplying reservoir 19, containing a liquid resin at the atmospheric pressure, and a supplying pump 21 capable of delivering the resin with the needed head to the injection nozzle.

According to an aspect of the invention, the liquid synthetic resin contained in the cited reservoir 19 and supplied by the supplying device, includes at least one active agent, comprising at least one catalyst and/or accelerator, necessary for successively crosslinking and solidifying the resin itself, which is at a first concentration which practically represents the ideal concentration for the successive crosslinking step. Obviously, such concentration depends on the type of catalyst and/or accelerator and on the type of resin used. From the point of view of the present invention it is not specified which is the catalyst and/or accelerator, but simply that the active agent present in the liquid synthetic resin received in the supplying reservoir 19 must be at a first concentration which is the optimal one selected according to the crosslinking process for forming the hollow elongated body.

The supplying device 18 is configured - during each cycle of manufacturing a respective elongated body - for dispensing a mass of liquid synthetic resin greater than the liquid mass necessary for forming said elongated body. In other words, the amount of resin dispensed to each cycle from the supplying device, entails a surplus material which exits the mould 2. For this purpose, the processing unit 100 is configured for controlling the supplying device 18 and commanding - during each cycle of manufacturing a respective elongated body - to dispense the liquid synthetic resin mass in a quantity greater than the mass quantity necessary for forming said elongated body in order to generate a surplus mass destined to exit from the mould. As it can be observed in Figure 1, the apparatus 1 exhibits a main flange 22 fixed at the longitudinal end of the mould having the greatest internal cross-section: the main flange 23 radially projects towards the inside of the mould, and exhibits an internal diameter substantially corresponding to the internal diameter of a longest base of the forming elongated body. In other words, the main flange 23 defines the maximum thickness of the liquid resin which, during the manufacturing cycle, can build up inside the mould 2 at the mould area of the greatest diameter: possible additional resin flows over the flange and is collected. Analogously, an ancillary flange 24 is fixed at the longitudinal end of the mould having the smallest internal cross-section: also the ancillary flange 24 radially projects towards the inside of the mould, and exhibits an internal diameter substantially corresponding to the internal diameter of the shortest base of said forming elongated body. Therefore, the ancillary flange defines the maximum thickness of the liquid resin that, during the manufacturing cycle, can build up inside the mould at the mould area of the smallest diameter: possible additional resin flows over the ancillary flange and is collected. As it is visible in Figure 1, the mould is frusto-conical, the main and ancillary flanges exhibiting a circular crown shape: such flanges are concentric and coaxially arranged with respect to the internal frusto-conical surface of said mould in order to define, at each mould end, a respective sealing edge 22a, 24a having a constant radial extension. In practice, the main flange and ancillary flange define the maximum thickness of the elongated body during the manufacturing step and therefore the maximum volume of resin which can be received at each cycle inside the mould. In an embodiment of the invention, the surplus resin is collected by a respective collector 25 placed at one or both the longitudinal ends of the mould: in the illustrated example, since the symmetry longitudinal axis of the mould is horizontal, the collector 25 is placed only at the maximum diameter end of the mould and is configured for collecting the surplus mass of the liquid synthetic resin exiting from the mould 2 and particularly flowing over said main flange 22. The collector 25 exhibits a discharge opening 26, optionally a valved one, configured for discharging the surplus synthetic resin towards a collecting tube. The collecting body can for example comprise a container or bin of a predetermined volume. The collecting body is used for receiving a predetermined quantity of liquid synthetic resin from the collector 25 and for enabling, through a discharge opening 28, to add new resin devoid of the active agent (catalyst and/or accelerator) or with said active agent at a very low concentration, in order to dilute the catalyst and/or accelerator concentration present in the mixture, obtained by mixing the new resin with the resin from the collector 25.

Last but not least, when are used resins requiring light for being cross-linked, the apparatus can comprise an illuminator 29, preferably a UV illuminator, positioned with respect to the mould to be lighted in a cavity inside the mould itself in order to promote the crosslinking of said synthetic resin. In order to enable to correctly deposit the fibre F in the mould, the apparatus 1 can comprise a winder 30, for example a tubular one, on which overlapped layers of the reinforcing fibrous material F which is desired to deposit in the mould 2 are wound. The winder 30, provided with the wound fibrous material F, is introduced in the mould 2 at the beginning of each manufacturing cycle - before depositing the resin - through an open longitudinal end of the mould 2. Once the winder 30 with the wound reinforcing fibrous material F is introduced in said mould, the winder is drawn out the fibrous material F and extracted. Therefore, by suitably rotating with respect to each other the fibrous material (which has the shape of a roll) and the mould, the fibrous material is unrolled and then is deposited on the mould 2 internal surface: in practice, the fibrous material is rotated in a direction (clockwise, for example), while the mould is put in rotation in an opposite direction (anticlockwise, for example) to cause the desired unrolling effect; subsequently, the resin may be supplied by the supplying device 18. The movement for inserting and extracting the winder can be controlled by a respective actuating group 31 controlled by the processing unit 100.

According to a further aspect of the invention, in addition the apparatus 1 comprises a temperature controlling group 32 associated to the mould 2 and in turn comprising a predetermined number of thermoregulation fluid distributors 33. The distributors 33 are positioned outside the mould and are configured for directing the thermoregulation fluid at least towards a plurality of predetermined portions of the external lateral surface of the mould in order to perform a thermal treatment on the whole external surface of the mould. To this end, the distributors 33 may be arranged radially around the external lateral surface of the mould to define a plurality of ejecting points according to circular crowns surrounding the mould and axially offset from each other. For example, two or more distributors 33 axially spaced from each other along the longitudinal development of the mould may be provided and each being provided with a plurality of ejecting points arranged circumferentially around the mould.

According to a further aspect of the invention, the distributors 33 are spaced along the longitudinal development of the mould, for example are evenly spaced from each other, and each comprises at least one adjusting valve member and at least one pressure sensor connected to the processing unit 100. Moreover, the unit 100 is configured for receiving a pressure signal from each pressure sensor and controlling each valve member in order to adjust a supply pressure to the distributor 33, and therefore a flow rate of the thermoregulation fluid ejected from each distributor, as a function of the detected pressure and a desired pressure value which, in turn, is a function of the position of the distributor along the longitudinal axis 4. Specifically, the processing unit 100 controls the valve member of each distributor in order to supply the fluid at a supply pressure, the greater the diameter of the mould cross-section which the respective distributor faces the higher the supply pressure.

In a variant of an embodiment, the fluid distributors 33 are configured and oriented for directing a portion of the thermoregulation fluid towards the bearings 14 in order to lubricate and simultaneously thermally control also these latter, ensuring in this way an optimal operation.

The temperature controlling group 32 further comprises a collecting unit 35, for example shaped as a tank, placed below the mould and configured for collecting the thermoregulation fluid that, after wetting the mould external surface, should fall by gravity towards the ground. Above the collecting unit 35, it is provided a covering structure 36 extending above and laterally the external lateral surface of the mould to define a housing receiving the mould and fluid distributors, in order to provide a thermal insulation and a protection both for the mould and the moving parts of the apparatus. Further, a fluid circuit 37 is interposed between the collecting unit 35 and distributors 33: the fluid circuit is configured for conveying the thermoregulation fluid from the collecting unit 25 towards the distributors 33 and provides at least one discharging conduit 38 withdrawing the thermoregulation fluid exiting a discharge opening 39 of the collecting unit 35, and conveying the fluid towards at least one heat exchange unit 40 positioned in the fluid circuit, and destined to enable a thermal regulation of the thermoregulation fluid inside a predetermined temperature range. The fluid exiting the heat exchange unit 40 enters a delivery conduit 41 communicating with the several thermoregulation fluid distributors. The controlling group 32 comprises at least one pump 42 placed in the fluid circuit, for example on the discharging conduit between the collecting unit and heat exchange unit, which pumps the fluid from the collecting unit towards the heat exchange unit and from there to the distributors. It is observed that the typically used resins for manufacturing poles, during the crosslinking step, perform an exothermic reaction, and therefore it is required a continuous and controlled cooling of the system. Specifically, in most cases, it has been found useful to maintain the temperature of the thermoregulation fluid supplied to the distributors 33 in a thermal range proximate to 85°C. To this end, the apparatus 1 or controlling group 100 comprises a processing unit 100 active on the pump and heat exchange unit in order to regulate the flow rate of the pump and at least one operative parameter of the heat exchange unit, for maintaining the thermoregulation fluid temperature in a predetermined thermal range, for example at a temperature less than 100°C, preferably comprised between 80°C and 90°C. More generally, the processing unit is capable of receiving or knowing the desired temperature or the thermal range in which the thermoregulation fluid falls and, therefore, controls the pump 42 and heat exchange unit 40 in order to maintain the cooling fluid temperature in a neighborhood of the desired temperature or inside such range.

For example, the heat exchange unit 40 may comprise heating electric resistances 52 and the control parameter can be in this case the temperature of the thermoregulation fluid exiting the heat exchange unit, as detected, for example, by a suitable heat sensor 43. The processing unit 100 may control the power supply to the electric resistances 52 in order to maintain the outlet temperature from the heat exchange unit into a predetermined range. Alternatively, a simple thermostat may activate the electric resistances for a predetermined time range when the outlet temperature of the fluid should fall below a predetermined value. In a further alternative, if the thermoregulation fluid should be cooled, the processing unit can control the heat exchange surfaces or the temperature of a cooling fluid of the heat exchange unit 40. Obviously, the control parameter can also be another reference temperature of the thermoregulation fluid, detected at points in the fluid circuit different from what has been above described.

After such substantially structural description, in the following a process of manufacturing elongated hollow bodies, optionally tapered poles, made of reinforced synthetic resin will be described. The process, described in the following, by way of example makes use of the apparatus according to what has been above described and/or according to what is claimed in the attached claims.

The manufacturing process comprises - for each cycle of manufacturing a hollow body - the following steps.

Firstly, it is provided a step 101 of preparing the reinforcing fibre to be placed inside the mould; the preparation step comprises the sub-steps of:
- arranging in a plane, a plurality of reinforcing fibre layers F,
- overlapping, at least partially, on each other said fibre layers: for example the layers F can be partially overlapped on each other so that once wound on a frusto-conical winder, it is ensured an uniform fibre distribution (or following, anyway, a predetermined rule) along the axis of the winder itself,
- winding said fibre layers F around the winder 30.

It is observed that, optionally, each of said reinforcing fibre layers, exhibits a respective width and a respective length different from the ones of the other layers, so that it is possible to concentrate the greatest fibre quantity in areas where it is required the highest mechanical strength.

Then, the reinforcing fibres are arranged (step 102) inside the elongated mould 2, in order to substantially cover an internal surface of the mould; the step 102 of arranging the reinforcing fibres inside said elongated mould provides - before depositing the resin and through an open longitudinal end of the mould 2 - to introduce in the mould 2 the winder with said wound fibre layers F. Once the winder 30 with the wound reinforcing fibre material F has been introduced in said mould, the winder is drawn out the fibrous material F and extracted, leaving the fibrous material inside the mould. Therefore, by suitably rotating with respect to each other the fibrous material (having the shape of a roll) and the mould, the fibrous material is unrolled and then is deposited on the mould 2 internal surface, in order to substantially cover such mould internal surface.

Once the fibre layers F have been positioned, it is introduced in said mould an amount of liquid synthetic fibre (step 103) comprising at least one active agent (a catalyst and/or accelerator) at a first concentration. During the resin introduction, the mould 2 is placed or maintained in rotation around the prevalent development longitudinal axis 4 of the mould itself (step 104), in order to impregnate said reinforcing fibres with said liquid synthetic resin: due to the centrifugal force, gravity and capillarity through the fibrous material F, the reinforcing fibre layers are progressively impregnated with the liquid synthetic resin.

Then, always keeping in rotation the mould, the liquid synthetic resin starts solidifying in order to form a solid elongated hollow body (step 105). By stopping the mould rotation (step 106), the solid state elongated body can be then extracted from the mould itself (step 107) .

According to an aspect of the invention, the liquid synthetic resin, introduced in the mould during each cycle of manufacturing a respective elongated body, exhibits a mass greater than the liquid mass required for forming the elongated body. Therefore, it is defined a surplus mass of liquid resin which, by flowing over the main flange 22, is collected by the collector 25 and conveyed towards the collecting bin 27 outside said mould (step 108).

To the surplus mass of used liquid resin collected outside the mould it is added a mass of new liquid resin in which the active agent (catalyst and/or accelerator) is present at a second concentration less than the first concentration for forming a liquid resin mixture in which such active agent is less concentrated than the optimal concentration for crosslinking it (step 109). Particularly, the second mass concentration of the active agent (catalyst and/or accelerator) is of 0.01%.

The new liquid resin mass added to the surplus mass collected outside the mould for forming the liquid resin mixture in the collecting container 27 is at least equal, preferably greater, still more preferably at least twice the surplus mass so that the active agent (catalyst and/or accelerator) concentration in the liquid mixture is of 50% or less than the first concentration: specifically, if the new resin should be devoid of the active agent (catalyst and/or accelerator) and should be dosed in a quantity twice the surplus resin collected in the container 27, the mass concentration of the active agent (catalyst and/or accelerator) would be about 1/3 the first concentration so that the resin would be stable at the liquid state for a standby time sufficient to transfer the whole contents of the container 27 to the supplying device 18 for a new manufacturing cycle (step 110).

De facto - once completed the cycle of manufacturing at least one elongated hollow body - to the resin mixture from the container 27 it is added a composition comprising the active agent (catalyst and/or accelerator) at a third concentration greater than the first concentration (step 111) for forming a liquid synthetic resin with the active agent (catalyst and/or accelerator) at least at said first concentration: such resin is - in a cycle of manufacturing a following hollow body - delivered inside said mould.

As previously discussed, during said step of introducing the synthetic resin in the mould, this latter is put or maintained in rotation around the prevalent development longitudinal axis of the mould itself at a predetermined angular speed with the synthetic resin at a liquid state which is supplied to the injection nozzle at a pressure greater than the atmospheric pressure.

During the step of depositing the resin and after during the solidification for crosslinking the same, it is provided to control the mould temperature (these steps are globally indicated by the box 112) by directing the thermoregulation fluid towards predetermined portions of an external lateral surface of the mould itself: as it was already illustrated, the fluid circuit 32 has the function of collecting the thermoregulation fluid falling from the mould, thermally regulating such fluid thanks to the heat exchange unit 40, and conveying the thermoregulation fluid again collected towards the distributors, and then again towards the mould external lateral surface. More particularly, the thermoregulation fluid is supplied to the mould from the distributors 33 in a thermal range proximate to a temperature predefined based on the materials and the executed cycle. For example, in many cases, the thermoregulation fluid is supplied to the distributor at a temperature proximate to 85°C. To this end, by suitably controlling the heat exchange unit and the thermoregulation fluid flow rate, the thermoregulation fluid temperature is maintained for example at a temperature less than 100°C, preferably comprised between 80°C and 90°C. More generally, by knowing the desired temperature at which the thermoregulation fluid is maintained, by controlling the pump 42 and heat exchange unit 40, it is possible to maintain the temperature of the cooling fluid in a neighborhood of the desired temperature and therefore ensure the optimal thermal regime for the mould. The thermally controlled thermoregulation fluid is directed at least towards a plurality of portions of an external lateral surface of the mould itself and, partially, towards the rotating supporting bearings of the mould.

Lastly, it is observed that for promoting the resin crosslinking step, it may be provided to light the internal cavity of the mould itself for example by one or more UV lamps, when, for example, it is used as synthetic resin one resin susceptible to crosslink by a light at predetermined radiations.

### PROCESSING UNIT

The processing unit 100 may comprise a single central unit controlling the above described operations or a plurality of units, each belonging to a respective subsystem of the apparatus 1. The unit 100 may be of a digital type or of an analog type or may combine a digital part and an analog part. The processing unit 100 comprises - or is connected to - one or more memories destined to store a program which, when executed by the unit 100, enables the unit itself to perform the above described functions.

### MATERIALS

The reinforcing fibrous material, for example consisting of woven or unwoven fabric layers, can be made of synthetic reinforcing fibres, such as carbon fibres, glass fibres, aramid fibre, Kevlar, boron fibre or natural fibres such as natural fibres of animal origin or natural fibres of vegetal origin.

The thermoregulation fluid comprises water or, preferably, oil, particularly diathermic oil.

Preferably, the synthetic resin is a thermosetting resin comprising, for example, polyester resins, vinyl ester resins, epoxy resins, phenolic resins and similar. In some applications, it is possible to provide the use of thermoplastic synthetic resins.

The active agent cited in the description and claims, may be not just a crosslinking catalyst, or a crosslinking accelerator, but also:
- a crosslinking agent,
- an agent including both a catalyst and a crosslinking accelerator,
- an agent including a crosslinking agent, and an accelerator,
- an agent including a crosslinking agent, and a catalyst,
- an agent including a crosslinking agent, an accelerator and a catalyst.

### ADVANTAGES

Thanks to the above described apparatus and process, it is obtained the possibility of forming hollow elongated bodies having a controlled thickness without wasting resin: in fact the surplus resin is recovered and reused as hereinbefore described.

The thermoregulation enables to maintain the system at ideal temperatures for the process without energy waste.

The rotating support thanks to the described bearings and to the lubrication and cooling of the same ensures an optimal and reliable operation over the time.

## Claims

1. Process for manufacturing hollow elongated bodies, optionally tapered poles, made of reinforced synthetic resin, comprising - for each hollow body manufacturing cycle - the following steps:
- arranging, inside an elongated mould, reinforcing fibres in order to substantially cover a predominant portion of the internal surface of the mould, said internal surface of the elongated mould having a tapered shape, optionally a frusto-conical one,
- introducing into said mould an amount of liquid synthetic resin comprising at least one active agent at a first concentration, the active agent being selected among:
o a cross-linking catalyst,
o a cross-linking accelerator,
o a cross-linking agent,
o an agent including one or more of one catalyst, a cross-linking accelerator, a cross-linking agent,
- putting in rotation the mould around a prevalent development longitudinal axis of the mould itself in order to impregnate said reinforcing fibres with said liquid synthetic resin,
- solidifying said liquid synthetic resin for forming an elongated hollow body,
- extracting said elongated hollow body at the solid state from the mould,
wherein:
- the liquid synthetic resin introduced in said mould, during each cycle of manufacturing a respective elongated body, exhibits a mass greater than the liquid mass necessary for forming said elongated body for therefore defining a surplus mass of liquid resin,
- the surplus mass is collected outside said mould, and
- to the surplus mass collected outside the mould it is added a new liquid resin mass in which said active agent is present at a second concentration smaller than the one of said first concentration for forming a mixture of liquid resin.

2. Process according to the preceding claim, wherein the second mass concentration of the active agent is zero or less than 0.01%.

3. Process according to claim 1 or 2, wherein the surplus mass is collected in a collector placed in at least one of the longitudinal ends of the mould and is transferred to a container wherein said liquid resin mixture is formed, and wherein the new liquid resin mass added to the surplus mass collected outside the mould for forming the liquid resin mixture in said container, is at least equal to, preferably greater than, still more preferably at least twice, the surplus mass, so that the concentration of said active agent in the liquid mixture in said container is 50% or less than the first concentration.

4. Process according to anyone of the preceding claims, wherein - once completed the cycle of manufacturing at least one elongated hollow body - to said resin mixture it is added a composition comprising said active agent at a third concentration for forming a liquid synthetic resin with the active agent at least at said first concentration which - in a following hollow body manufacturing cycle - is supplied inside said mould.

5. Process according to anyone of the preceding claims using an apparatus for forming elongated hollow bodies, optionally tapered poles, comprising:
- said elongated mould having an internal surface configured for receiving reinforcing fibres and synthetic resin, said internal surface of the elongated mould having a tapered shape, optionally a frusto-conical one,
- at least one driving device configured for putting in rotation the mould around a prevalent development longitudinal axis of the mould itself,
- at least one injection nozzle positioned and configured for introducing synthetic resin in said elongated mould, optionally wherein the injection nozzle is configured for operating at at least one longitudinal end of said mould,
- a resin supplying device connected to the injection nozzle and configured for supplying synthetic resin at a liquid state to the injection nozzle,
- a temperature controlling group associated to the mould and in turn comprising:
a predetermined number of distributors of a thermoregulation fluid, positioned outside the mould, and configured for directing the thermoregulation fluid at least towards predetermined portions of an external lateral surface of the mould itself,
a collecting unit placed below the mould and configured for collecting the thermoregulation fluid,
a fluid circuit interposed between the collecting unit and the predetermined number of distributors, said fluid circuit being configured for conveying the thermoregulation fluid from the collecting unit towards the predetermined number of distributors,
- a supporting stationary structure adapted to rotatively support said mould and a plurality of rolling element bearings placed outside the mould, each of said bearings having a stationary part constrained to the supporting stationary structure, and a rotating part constrained to a respective section of the external lateral surface of the mould, rolling elements being placed between the stationary part and the rotating part of each bearing; said stationary part and said rotating part of each bearing being concentrically placed around a respective section of the mould,
- a main flange fixed at the longitudinal end of the mould having the greatest internal cross-section, said main flange radially projecting towards the inside of the mould an exhibiting and internal diameter substantially corresponding to the internal diameter of a longest base of said forming elongated body,
- an ancillary flange fixed at the longitudinal end of said mould having the smallest internal cross-section, said ancillary flange radially projecting towards the inside of the mould and exhibiting an internal diameter substantially corresponding to the internal diameter of a shortest base of said forming elongated body, and
- a collector placed at at least one of the longitudinal ends of the mould and configured for collecting a surplus mass of the liquid synthetic resin exiting the mould, particularly the liquid synthetic resin flowing over said main flange.

6. Process according to anyone of the preceding claims, wherein - during said step of introducing the synthetic resin in the mould - this latter is put in rotation around a prevalent development longitudinal axis of the mould itself, particularly at a predetermined angular speed.

7. Process according to anyone of the preceding claims, wherein the liquid state synthetic resin is supplied to the injection nozzle at a pressure greater than the atmospheric pressure.

8. Process according to anyone of the preceding claims, comprising the step of controlling the temperature of the mould by directing a thermoregulation fluid at least towards predetermined portions of an external lateral surface of the mould itself, collecting the thermoregulation fluid falling from the mould, conveying the collected thermoregulation fluid again towards said portions of the external lateral surface of the mould; and
wherein the collected thermoregulation fluid is initially supplied to a heat exchange unit in order to enable to thermally regulate the thermoregulation fluid and therefore again towards said portions of the external lateral surface of the mould.

9. Process according to claim 8, wherein the thermoregulation fluid supplied to the mould is maintained at a temperature inside a predetermined thermal range, for example at a temperature smaller than 100°C, preferably comprised between 80°C and 90°C, and the thermoregulation fluid is directed at least towards a plurality of portions of an external lateral surface of the mould itself.

10. Process according to anyone of the preceding two claims, wherein a portion of the thermoregulation fluid is directed towards the rotating supporting bearings of the mould.

11. Process according to anyone of the preceding claims, wherein said synthetic resin is of a light-crosslinkable type, and wherein it is provided to light an internal cavity of the mould itself for promoting or aiding said solidification by crosslinking said liquid synthetic resin.

12. Process according to anyone of the preceding claims, wherein it is provided a step of preparing reinforcing fibres to be arranged inside the mould, said preparing step comprising:
- arranging in a plane a plurality of layers of said reinforcing fibers, optionally wherein each of said layers exhibits a respective width and a respective length different from the ones of the other layers,
- at least partially overlapping on each other said layers,
- winding said layers on a winder, optionally on a tubular winder.

13. Process according to the preceding claim, wherein the step of arranging the reinforcing fibres inside said elongated mould comprises:
- introducing in said mould, the winder having said layers wound on the winder itself, said introduction being performed through at least one end opening of the mould,
- drawing away the winder from the fibrous material (F) and extracting such winder from the mould,
- putting in rotation the mould in order to enable to unwind the reinforcing fibres layers and progressively depositing the same at said internal surface of the mould.

14. Process according to anyone of the preceding claims, wherein the step of inserting the liquid resin in the mould is performed by maintaining the injection nozzle in a fixed position at a terminal area of the mould, the dispensing opening being arranged inside the mould and at a predetermined distance - not greater than 1/3 of the mould axial extension - from a minimum area opening of the mould itself.

15. Process according to anyone of the preceding claims, wherein the thermoregulation fluid comprises water or, preferably, oil, particularly diathermic oil,
and wherein the reinforcing material comprises synthetic reinforcing fibers, such as carbon fibers, glass fibers, aramid fibre, Kevlar, boron fibre or natural reinforcing fibres such as natural fibres of animal origin or natural fibres of vegetal origin.

## Patentansprüche

1. Verfahren zur Herstellung von langgestreckten Hohlkörpern, optional verjüngten Stangen, die aus verstärktem Kunstharz hergestellt sind, wobei es-für jeden Hohlkörperherstellungszyklus-die folgenden Schritte aufweist:
- Anordnen von Verstärkungsfasern innerhalb einer langgestreckten Form, um im Wesentlichen einen überwiegenden Abschnitt der Innenoberfläche der Form zu bedecken, wobei die Innenoberfläche der langgestreckten Form eine verjüngte, optional kegelstumpfförmige Gestalt aufweist,
- Einführen einer Menge von flüssigem Kunstharz, das zumindest ein aktives Mittel mit einer ersten Konzentration aufweist, in die Form, wobei das aktive Mittel ausgewählt ist unter:
o einem Vernetzungskatalysator,
o einem Vernetzungsbeschleuniger,
o einem Vernetzungmittel,
o einem Mittel, das einen oder mehr eines Katalysators, eines Vernetzungsbeschleunigers, eines Vernetzungsmittels enthält,
- Versetzen der Form in Drehung um eine prävalente Abwicklungslängsachse der Form selbst, um die Verstärkungsfaser mit dem flüssigen Kunstharz zu imprägnieren,
- Verfestigen des flüssigen Kunstharzes zur Bildung eines langgestreckten Hohlköpers,
- Herausnehmen des langgestreckten Hohlkörpers im festen Zustand aus der Form,
wobei:
- das flüssige Kunstharz, das während jedes Zyklus der Herstellung eines jeweiligen langgestreckten Körpers in die Form eingeführt wird, eine größere Masse aufzeigt als die flüssige Masse, die zur Bildung des langgestreckten Körpers erforderlich ist, um dafür eine überschüssige Masse des flüssigen Harzes zu definieren,
- wobei die überschüssige Masse außerhalb der Form gesammelt wird, und
- zu der außerhalb der Form gesammelten überschüssigen Masse eine neue flüssige Kunstharzmasse hinzugefügt wird, in der das aktive Mittel in einer zweiten Konzentration vorhanden ist, die kleiner ist als jene der ersten Konzentration, um ein Gemisch von flüssigem Kunstharz zu bilden.

2. Verfahren nach dem vorangehenden Anspruch, wobei die zweite Massenkonzentration des aktiven Mittels Null oder weniger als 0,01 % ist.

3. Verfahren nach Anspruch 1 oder 2, wobei die überschüssige Masse in einem Sammler gesammelt wird, der an zumindest einem der Längsenden der Form angeordnet ist, und zu einem Behälter überführt wird, in dem das flüssige Harzgemisch gebildet wird, und wobei die neue flüssige Harzmasse, die zu der außerhalb der Form gesammelten überschüssigen Masse hinzugefügt ist, um das flüssige Harzgemisch in dem Behälter zu bilden, zumindest gleich, bevorzugt größer als, noch weiter bevorzugt zumindest doppelt so groß ist wie die überschüssige Masse, so dass die Konzentration des aktiven Mittels in dem flüssigen Gemisch in dem Behälter 50% oder weniger als die erste Konzentration beträgt.

4. Verfahren nach einem der vorhergehenden Ansprüche, wobei-sobald der Zyklus der Herstellung von zumindest einem langgestreckten Hohlkörper abgeschlossen ist - zu dem Harzgemisch eine Zusammensetzung hinzugefügt wird, die das aktive Mittel in einer dritten Konzentration aufweist, um ein flüssiges Kunstharz mit dem aktiven Mittel in zumindest der ersten Konzentration zu bilden, die - in einem folgenden Hohlkörperherstellungszyklus - der Innenseite der Form zugeführt wird.

5. Verfahren nach einem der vorhergehenden Ansprüche unter Verwendung einer Vorrichtung zur Formung von langgestreckten Hohlkörpern, optional verjüngten Stangen, wobei sie aufweist:
- langgestreckte Form mit einer Innenoberfläche, die zur Aufnahme von Verstärkungsfasern und Kunstharz konfiguriert ist, wobei die Innenoberfläche der langgestreckten Form eine verjüngte, optional kegelstumpfförmige Gestalt aufweist,
- zumindest eine Antriebsvorrichtung, die konfiguriert ist, um die Form um eine prävalente Abtwicklungslängsachse der Form selbst in Drehung zu versetzen,
- zumindest eine Einspritzdüse, die positioniert und konfiguriert ist, um Kunstharz in die langgestreckte Form einzuführen, wobei optional die Einspritzdüse konfiguriert ist, um an zumindest einem Längsende der Form zu arbeiten,
- eine Harzzuführvorrichtung, die mit der Einspritzdüse verbunden und konfiguriert ist, Kunstharz im flüssigen Zustand der Einspritzdüse zuzuführen,
- eine Temperatursteuergruppe, die der Form zugeordnet ist und wiederum aufweist:
eine vorbestimmte Anzahl von Verteilern eines Wärmeregulierfluids, die außerhalb der Form angeordnet und konfiguriert sind, um das Wärmeregulierfluid zumindest zu vorbestimmten Abschnitten einer Außenseitenfläche der Form selbst auszurichten,
eine Sammeleinheit, die unter der Form angeordnet und konfiguriert ist, das Wärmeregulierfluid zu sammeln,
einen Fluidkreislauf, der zwischen der Sammeleinheit und der vorbestimmten Anzahl von Verteilern eingefügt ist, wobei der Fluidkreislauf konfiguriert ist, um das Wärmeregulierfluid von der Sammeleinheit zu der vorbestimmten Anzahl von Verteilern zu fördern,
- eine stationäre Tragstruktur, die dazu ausgelegt ist, die Form und eine Mehrzahl von außerhalb der Form angeordneten Wälzkörperlagern drehbar zu tragen, wobei jedes der Lager ein stationäres Teil, das an der stationären Tragstruktur gehalten ist, und ein drehendes Teil, das an einem jeweiligen Abschnitt der Außenseitenfläche der Form gehalten ist, aufweist, wobei Wälzkörper zwischen dem stationären Teil und dem drehenden Teil jedes Lagers angeordnet sind; wobei das stationäre Teil und das drehende Teil jedes Lagers um einen jeweiligen Abschnitt der Form herum konzentrisch angeordnet sind,
- einen Hauptflansch, der an dem Längsende der Form mit dem größten Innenquerschnitt befestigt ist, wobei der Hauptflansch radial zur Innenseite der Form vorsteht und einen Innendurchmesser aufzeigt, der im Wesentlichen dem Innendurchmesser einer längsten Basis des geformten langgestreckten Körpers entspricht,
- einen Hilfsflansch, der an dem Längsende der Form mit dem kleinsten Innenquerschnitt befestigt ist, wobei der Hilfsflansch radial zur Innenseite der Form vorsteht und einen Innendurchmesser zeigt, der im Wesentlichen dem Innendurchmesser einer kürzesten Basis des geformten langgestreckten Körpers entspricht, und
- einen Sammler, der an zumindest einem der Längsenden der Form angeordnet und konfiguriert ist, um eine überschüssige Masse des aus der Form austretenden flüssigen Kunstharzes zu sammeln, insbesondere des flüssigen Kunstharzes, das über den Hauptflansch fließt.

6. Verfahren nach einem der vorhergehenden Ansprüche, wobei - während des Schritts des Einführens des Kunstharzes in die Form - diese Letztere um eine prävalente Abwicklungslängsachse der Form der selbst in Drehung versetzt wird, insbesondere mit einer vorbestimmten Winkelgeschwindigkeit.

7. Verfahren nach einem der vorhergehenden Ansprüche, wobei das flüssige Kunstharz der Einspritzdüse mit einem Druck zugeführt wird, der größer ist als der Atmosphärendruck.

8. Verfahren nach einem der vorhergehenden Ansprüche, das den Schritt aufweist, die Temperatur der Form zu steuern, indem ein Wärmeregulierfluid zumindest zu vorbestimmten Abschnitten einer Außenseitenfläche der Form selbst ausgerichtet wird, sammeln des aus der Form anfallenden Wärmeregulierfluids, Fördern des gesammelten Wärmeregulierfluids wieder zu den Abschnitten der Außenseitenfläche der Form; und
wobei das gesammelte Wärmeregulierfluid anfänglich einer Wärmeaustauscheinheit, um in der Lage zu sein, das Wärmeregulierfluid thermisch zu regulieren, und daher den Abschnitten der Außenseitenfläche der Form wieder zugeführt wird.

9. Verfahren nach Anspruch 8, wobei das der Form zugeführte Wärmeregulierfluid auf einer Temperatur innerhalb eines vorbestimmten Wärmebereichs gehalten wird, z.B. einer Temperatur unterhalb 100°C, bevorzugt zwischen 80°C und 90°C, und das Wärmeregulierfluid zumindest zu einer Mehrzahl von Abschnitten der Außenseitenfläche der Form selbst ausgerichtet wird.

10. Verfahren nach einem der vorhergehenden zwei Ansprüche, wobei ein Teil des Wärmeregulierfluids zu den Drehtraglagern der Form ausgerichtet wird.

11. Verfahren nach einem der vorhergehenden Ansprüche, wobei das Kunstharz vom leicht vernetzbaren Typ ist, wobei es einem Innenhohlraum der Form selbst zugeführt wird, um eine Verfestigung durch Vernetzung des flüssigen Kunstharzes zu begünstigen oder zu unterstützen.

12. Verfahren nach einem der vorhergehenden Ansprüche, wobei es einen Schritt aufweist, Verstärkungsfasern zur Anordnung innerhalb der Form vorzubereiten, wobei der Vorbereitungsschritt aufweist:
- Anordnen einer Mehrzahl von Schichten der Verstärkungsfasern in einer Ebene, wobei optional jede der Schichten eine jeweilige Breite und eine jeweilige Länge aufzeigt, die sich von jenen der anderen Schichten unterscheiden,
- zumindest partielles Überlappen der Schichten aufeinander,
- Wickeln der Schichten auf einen Wickler, optional auf einen rohrförmigen Wickler.

13. Verfahren nach dem vorhergehenden Anspruch, wobei der Schritt des Anordnens der Verstärkungsfasern innerhalb der langgestreckten Form aufweist:
- Einführen des Wicklers mit den auf den Wickler selbst gewickelten Schichten in die Form, wobei das Einführen durch zumindest eine Endöffnung der Form erfolgt,
- Wegziehen des Wicklers von dem Fasermaterial (F) und Herausnehmen des Wicklers aus der Form,
- Versetzen der Form in Drehung, um zu ermöglichen, die Verstärkungsfaserschichten abzuwickeln und diese fortschreitend auf die Oberfläche der Form aufzulagern.

14. Verfahren nach einem der vorhergehenden Ansprüche, wobei der Schritt des Einführens des flüssigen Harzes in die Form durchgeführt wird, indem die Einspritzdüse in einer festen Position an einem Endbereich der Form gehalten wird, wobei die Ausgabeöffnung innerhalb der Form und mit einem vorbestimmten Abstand - nicht größer als 1/3 der axialen Formerstreckung - von einer minimalen Öffnungsfläche der Form selbst angeordnet wird.

15. Verfahren nach einem der vorhergehenden Ansprüche, wobei das Wärmeregulierfluid Wasser oder bevorzugt Öl, insbesondere diathermisches Öl aufweist,
und wobei das Verstärkungsmaterial synthetische Verstärkungsfasern, wie etwa Karbonfasern, Glasfasern, Aramidfaser, Kevlar, Borfaser oder natürliche Verstärkungsfasern, wie etwa natürliche Fasern tierischen Ursprungs oder natürliche Fasern pflanzlichen Ursprungs, aufweist.

## Revendications

1. Procédé de fabrication de corps allongés creux, éventuellement de poteaux effilés, constitués de résine synthétique renforcée, comprenant - pour chaque cycle de fabrication de corps creux - les étapes suivantes :
- mise en place, à l'intérieur d'un moule allongé, de fibres de renfort afin de recouvrir sensiblement une partie prédominante de la surface interne du moule, ladite surface interne du moule allongé ayant une forme effilée, éventuellement une forme frusto-conique,
- introduction dans ledit moule d'une quantité de résine synthétique liquide comprenant au moins un agent actif à une première concentration, l'agent actif étant sélectionné parmi :
o un catalyseur de réticulation,
o un accélérateur de réticulation,
o un agent de réticulation,
o un agent comprenant l'un ou plusieurs parmi un catalyseur, un accélérateur de réticulation, un agent de réticulation,
- la mise en rotation du moule autour d'un axe longitudinal de développement prévalent du moule lui-même afin d'imprégner lesdites fibres de renfort de ladite résine synthétique liquide,
- la solidification de ladite résine synthétique liquide pour former un corps allongé creux,
- l'extraction dudit corps allongé creux à l'état solide du moule,
où :
- la résine synthétique liquide introduite dans ledit moule, durant chaque cycle de fabrication d'un corps allongé respectif, fait preuve d'une masse supérieure à la masse liquide nécessaire pour former ledit corps allongé pour définir ainsi une masse en surplus de résine liquide,
- la masse en surplus est recueillie à l'extérieur dudit moule, et
- à la masse en surplus recueillie à l'extérieur du moule est ajoutée une nouvelle masse de résine liquide dans laquelle ledit agent actif est présent à une seconde concentration inférieure à celle de ladite première concentration pour former un mélange de résine liquide.

2. Procédé selon la revendication précédente, dans lequel la concentration de la seconde masse d'agent actif est nulle ou inférieure à 0,01 %.

3. Procédé selon la revendication 1 ou 2, dans lequel la masse en surplus est recueillie dans un collecteur placé dans au moins l'une des extrémités longitudinales du moule et est transférée vers un récipient dans lequel ledit mélange de résine liquide est formé, et dans lequel la nouvelle masse de résine liquide ajoutée à la masse en surplus recueillie à l'extérieur du moule pour former le mélange de résine liquide dans ledit récipient, est au moins égale à, préférablement supérieure à, encore plus préférablement à au moins deux fois, la masse en surplus, de sorte que la concentration dudit agent actif dans le mélange liquide dans ledit récipient représente 50 % de, ou est inférieure à, la première concentration.

4. Procédé selon l'une quelconque des revendications précédentes, dans lequel - une fois complété le cycle de fabrication d'au moins un corps allongé creux
- audit mélange de résine est ajoutée une composition comprenant ledit agent actif à une troisième concentration pour former une résine synthétique liquide avec l'agent actif au moins à ladite première concentration qui - dans un cycle de fabrication de corps creux suivant - est alimentée à l'intérieur dudit moule.

5. Procédé selon l'une quelconque des revendications précédentes utilisant un appareil de formation de corps allongés creux, éventuellement de poteaux effilés, comprenant :
- ledit moule allongé ayant une surface interne configurée pour recevoir des fibres de renfort et de la résine synthétique, ladite surface interne du moule allongé ayant une forme effilée, éventuellement une forme frusto-conique,
- au moins un dispositif d'entraînement configuré pour placer le moule en rotation autour d'un axe longitudinal de développement prévalent du moule lui-même,
- au moins une buse d'injection positionnée et configurée pour l'introduction de résine synthétique dans ledit moule allongé, éventuellement la buse d'injection étant configurée pour fonctionner au moins à une extrémité longitudinale dudit moule,
- un dispositif d'alimentation de résine relié à la buse d'injection et configuré pour alimenter la résine synthétique sous un état liquide au niveau de la buse d'injection,
- un groupe de régulation de température associé au moule et à son tour comprenant :
un nombre prédéterminé de distributeurs d'un liquide de thermorégulation, positionnés à l'extérieur du moule, et configurés pour diriger le liquide de thermorégulation au moins vers les parties prédéterminées d'une surface latérale externe du moule lui-même,
une unité de collecte placée en-dessous du moule et configurée pour recueillir le liquide de thermorégulation,
un circuit de liquide interposé entre l'unité de collecte et le nombre prédéterminé de distributeurs, ledit circuit de liquide étant configuré pour transporter le liquide de thermorégulation depuis l'unité de collecte vers le nombre prédéterminé de distributeurs,
- une structure stationnaire de support adaptée pour supporter de manière rotative ledit moule et une pluralité de paliers d'éléments de roulement placés à l'extérieur du moule, chacun des paliers ayant une partie stationnaire contrainte à la structure stationnaire de support, et une partie rotative contrainte à une section respective de la surface latérale externe du moule, les éléments de roulement étant placés entre la partie stationnaire et la partie rotative de chaque palier ; ladite partie stationnaire et ladite partie rotative de chaque palier étant placées de manière concentrique autour d'une section respective du moule,
- une collerette principale fixée à l'extrémité longitudinale du moule ayant la section transversale interne la plus grande, ladite collerette principale se projetant radialement vers l'intérieur du moule et affichant un diamètre interne correspondant sensiblement au diamètre interne d'une base la plus longue dudit corps allongé de formation,
- une collerette auxiliaire fixée à l'extrémité longitudinale dudit moule ayant la section transversale interne la plus petite, ladite collerette auxiliaire se projetant radialement vers l'intérieur du moule et faisant preuve d'un diamètre interne correspondant sensiblement au diamètre interne d'une base la plus courte dudit corps allongé de formation, et
- un collecteur placé au niveau d'au moins l'une des extrémités longitudinales du moule et configuré pour recueillir une masse en surplus de la résine synthétique liquide sortant du moule, particulièrement de la résine synthétique liquide s'écoulant par-dessus ladite collerette principale.

6. Procédé selon l'une quelconque des revendications précédentes, dans lequel - durant ladite étape d'introduction de la résine synthétique dans le moule - cette dernière est placée en rotation autour d'un axe longitudinal de développement prévalent du moule lui-même, particulièrement à une vitesse angulaire prédéterminée.

7. Procédé selon l'une quelconque des revendications précédentes, dans lequel la résine synthétique à l'état liquide est alimentée à la buse d'injection à une pression supérieure à la pression atmosphérique.

8. Procédé selon l'une quelconque des revendications précédentes, comprenant l'étape de régulation de la température du moule en dirigeant un liquide de thermorégulation au moins vers les parties prédéterminées d'une surface latérale externe du moule lui-même, en recueillant le liquide de thermorégulation tombant du moule, en transportant le liquide de thermorégulation recueilli à nouveau vers lesdites parties de la surface latérale externe du moule ; et
où le liquide de thermorégulation recueilli est alimenté initialement à une unité d'échange thermique afin de permettre de réguler thermiquement le liquide de thermorégulation et par conséquent à nouveau vers lesdites parties de la surface latérale externe du moule.

9. Procédé selon la revendication 8, dans lequel le liquide de thermorégulation alimenté au niveau du moule est maintenu à une température à l'intérieur d'une plage thermique prédéterminée, par exemple à une température inférieure à 100°C, préférablement comprise entre 80°C et 90°C, et le liquide de thermorégulation étant dirigé au moins vers une pluralité de parties d'une surface latérale externe du moule lui-même.

10. Procédé selon l'une quelconque des deux revendications précédentes, dans lequel une partie du liquide de thermorégulation est dirigée vers les paliers de support rotatifs du moule.

11. Procédé selon l'une quelconque des revendications précédentes, dans lequel ladite résine synthétique est d'un type réticulable à la lumière, et dans lequel est prévu l'éclairage d'une cavité interne du moule lui-même pour favoriser ou contribuer à ladite solidification par la réticulation de ladite résine synthétique liquide.

12. Procédé selon l'une quelconque des revendications précédentes, dans lequel est fournie une étape de préparation de fibres de renfort à disposer à l'intérieur du moule, ladite étape de préparation comprenant :
- la mise en place dans un plan d'une pluralité de couches desdites fibres de renfort, éventuellement dans laquelle chacune desdites couches fait preuve d'une largeur respective et d'une longueur respective différentes de celles des autres couches,
- le chevauchement au moins partiellement sur chacune desdites autres couches,
- l'enroulement desdites couches sur un dévidoir, éventuellement sur un dévidoir tubulaire.

13. Procédé selon la revendication précédente, dans lequel l'étape de mise en place des fibres de renfort à l'intérieur dudit moule allongé comprend :
- l'introduction dans ledit moule, du dévidoir ayant lesdites couches enroulées sur le dévidoir lui-même, ladite introduction étant exécutée à travers au moins une ouverture d'extrémité du moule,
- la sortie du matériau fibreux (F) loin du dévidoir et l'extraction d'un tel dévidoir du moule,
- la mise en rotation du moule afin de permettre le déroulage des couches de fibres de renfort et progressivement leur dépôt au niveau de ladite surface interne du moule.

14. Procédé selon l'une quelconque des revendications précédentes, dans lequel l'étape d'insertion de la résine liquide dans le moule est effectuée en maintenant la buse d'injection en une position fixe au niveau d'une zone terminale du moule, l'ouverture de distribution étant disposée à l'intérieur du moule et à une distance prédéterminée - non supérieure à 1/3 de l'extension axiale du moule - depuis une ouverture de surface minimale du moule lui-même.

15. Procédé selon l'une quelconque des revendications précédentes, dans lequel le liquide de thermorégulation comprend de l'eau ou, préférablement, de l'huile, particulièrement de l'huile diathermique,
et dans lequel le matériau de renfort comprend des fibres de renfort synthétiques, telles que des fibres de carbone, des fibres de verre, une fibre d'aramide, du Kevlar, une fibre de bore ou des fibres de renfort naturelles telles que des fibres naturelles d'origine animale ou des fibres naturelles d'origine végétale.
